(19) Europäisches Patentamt
European Patent Office
Office européen des brevets

(11) EP 4 207 697 A1

(12) **EUROPEAN PATENT APPLICATION**
published in accordance with Art. 153(4) EPC

(43) Date of publication:
**05.07.2023 Bulletin 2023/27**

(21) Application number: **21860568.1**

(22) Date of filing: **30.08.2021**

(51) International Patent Classification (IPC):
**H04L 27/36** (2006.01)

(52) Cooperative Patent Classification (CPC):
**H04L 27/36**

(86) International application number:
**PCT/CN2021/115480**

(87) International publication number:
**WO 2022/042736 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2020 CN 202010899442**

(71) Applicant: **ZTE Corporation
Shenzhen, Guangdong 518057 (CN)**

(72) Inventors:
• **HUANG, Xingang
Shenzhen, Guangdong 518057 (CN)**
• **CHI, Nan
Shenzhen, Guangdong 518057 (CN)**
• **ZOU, Peng
Shenzhen, Guangdong 518057 (CN)**
• **MA, Zhuang
Shenzhen, Guangdong 518057 (CN)**

(74) Representative: **Novagraaf Technologies
Bâtiment O2
2, rue Sarah Bernhardt
CS90017
92665 Asnières-sur-Seine Cedex (FR)**

(54) **SIGNAL COMPENSATION PROCESSING METHOD AND APPARATUS**

(57)    Embodiments of the present invention provides a signal compensation processing method and apparatus, wherein the method includes: an I-path received data signal obtained by receiving an I-path transmitted data signal, and a Q-path received data signal obtained by receiving a Q-path transmitted data signal are acquired; cascade transformation is performed on the I-path received data signal and the Q-path received data signal, so as to obtain a data characteristic signal; and the data characteristic signal is compensated according to predetermined target model parameters, so as to obtain an IQ equalized signal. Therefore, the problem in the related art of a high bit error rate for mutual influence between IQ signals in optical communication can be solved. The data characteristic signal, which is obtained by performing cascade transformation on the IQ received data signals, is compensated on the basis of the predetermined target model parameters, so as to obtain the IQ equalized signal, thereby reducing the bit error rate of the IQ signals.

An I-path received data signal obtained by receiving an I-path transmitted data signal, and a Q-path received data signal obtained by receiving a Q-path transmitted data signal are acquired — S202

Cascade transformation is performed on the I-path received data signal and the Q-path received data signal, so as to obtain a data characteristic signal — S204

The data characteristic signal is compensated according to predetermined target model parameters, so as to obtain an IQ equalized signal — S206

Fig. 2

**Description**

**Cross-Reference to Related Application**

The present invention claims the priority of Chinese Patent Application CN202010899442.X, filed in on August31, 2020, and entitled "Signal Compensation Processing Method and Apparatus", the entire contents of which are herein incorporated by reference.

**Technical Field**

Embodiments of the present invention relate to the field of communications, and in particular, to a signal compensation processing method and apparatus.

**Background**

IQ optical signals are a common light modulation means in communication. The IQ optical signals are generated by performing up-conversion and then superposition on two paths of orthogonal signals, and then performing corresponding down-conversion at a receiving end, so that the two signals can be separated. However, for an access network system, when an I-path signal and a Q-path signal come from different sources, the signal-to-noise ratio is greatly deteriorated due to the problems of power mismatch, clock synchronization, nonlinear effect and the like when the two paths of signals are superimposed, so that the capacity of the system is reduced.

At this time, an equalization algorithm commonly used in optical communication, such as a least mean square error (SISO-LMS) [1], and a recursive least square algorithm (RLS), is required to compensate for signal distortion. However, even if nonlinear terms based on a Volterra level are used, for stronger nonlinear effects, and especially when the I and Q paths mutually influence each other, the compensation effects of LMS (Lest Mean Square) and RLS are also quite limited. Thus, a deep neural network (SISO-DNN) [2] with complex nonlinear mapping capability is introduced into a communication system to serve as a rear equalizer. Existing studies have shown that the deep neural network (DNN) has good performance on application occasions such as post-equalization of signals. However, when the nonlinearity of the system is relatively high, the complexity of the system needs to be greatly improved by using a traditional deep neural network, so as to provide better equalization performance. Therefore, this is a very unfavorable factor for a communication network with extremely high real-time requirements. Moreover, most of the currently published neural network algorithms are based on a single input single output (SISO) system, but fewer researches are made on an equalization network for two paths of signals, for example, mutual influence between two IQ paths of signals. Therefore, the development of a neural network suitable for the IQ signals of optical communication becomes a problem to be solved urgently at present. Using a traditional deep network has a high bit error rate and high algorithm complexity.

**Summary**

Embodiments of the present invention provide a signal compensation processing method and apparatus, so as to at least solve the problem in the related art of a high bit error rate for mutual influence between IQ signals in optical communication.

According to an embodiment of the present invention, provided is a signal compensation processing method, including:

an I-path received data signal obtained by receiving an I-path transmitted data signal, and a Q-path received data signal obtained by receiving a Q-path transmitted data signal are acquired;

cascade transformation is performed on the I-path received data signal and the Q-path received data signal, so as to obtain a data characteristic signal; and

the data characteristic signal is compensated according to predetermined target model parameters, so as to obtain an IQ equalized signal.

According to another embodiment of the present invention, further provided is a signal compensation processing apparatus, including:

a first acquisition module, configured to acquire an I-path received data signal obtained by receiving an I-path transmitted data signal, and a Q-path received data signal obtained by receiving a Q-path transmitted data signal;

a first cascade module, configured to perform cascade transformation on the I-path received data signal and the Q-path received data signal, so as to obtain a data characteristic signal; and

a compensation module, configured to compensate the characteristic signal according to predetermined target model parameters, so as to obtain an IQ equalized signal.

According to yet another embodiment of the present invention, further provided is a computer-readable storage medium, wherein a computer program is stored in the computer-readable storage medium, and the computer program is configured to execute the steps in any one of the foregoing method embodiments when running.

According to yet another embodiment of the present invention, further provided is an electronic apparatus, including: a memory and a processor, wherein a computer program is stored in the memory, and the processor is configured to run the computer program, so as to execute the steps in any one of the foregoing method embodiments.

In the present invention, by means of acquiring the I-path received data signal obtained by receiving the I-path transmitted data signal, and the Q-path received data signal obtained by receiving the Q-path transmitted data signal; performing cascade transformation on the I-path received data signal and the Q-path received data signal, so as to obtain the characteristic signal; and compensating the data characteristic signal according to the predetermined target model parameters, so as to obtain the IQ equalized signal, the problem in the related art of a high bit error rate for mutual influence between IQ signals in optical communication can be solved. The data characteristic signal, which is obtained by performing cascade transformation on the IQ received data signals, is compensated on the basis of the predetermined target model parameters, so as to obtain the IQ equalized signal, thereby reducing the bit error rate of the IQ signals.

## Brief Description of the Drawings

Fig. 1 is a block diagram of a hardware structure of a mobile terminal of a signal compensation processing method according to an embodiment of the present invention;

Fig. 2 is a flowchart of a signal compensation processing method according to an embodiment of the present invention;

Fig. 3 is a flowchart of a signal compensation processing method according to an embodiment of the present invention;

Fig. 4 is a flowchart of a method for receiving and compensating IQ signals according to an embodiment of the present invention;

Fig. 5 is a schematic diagram of a multi-input multi-output multi-branch neural network equalizer of a heterogeneous deep neural network according to an embodiment of the present invention;

Fig. 6 is a schematic diagram of a verification experiment platform according to an embodiment of the present invention;

Fig. 7 is a structural block diagram of a signal compensation processing apparatus according to an embodiment of the present invention; and

Fig. 8 is a structural block diagram of a signal compensation processing apparatus according to a preferred embodiment of the present invention.

## Detailed Description of the Embodiments

The embodiments of the present invention will be described in detail hereinafter with reference to the drawings and in combination with the embodiments.

It should be noted that, the terms "first", "second" and the like in the specification and claims of the present invention and the drawings are used for distinguishing similar objects, and are not necessarily used for describing a specific order or sequence.

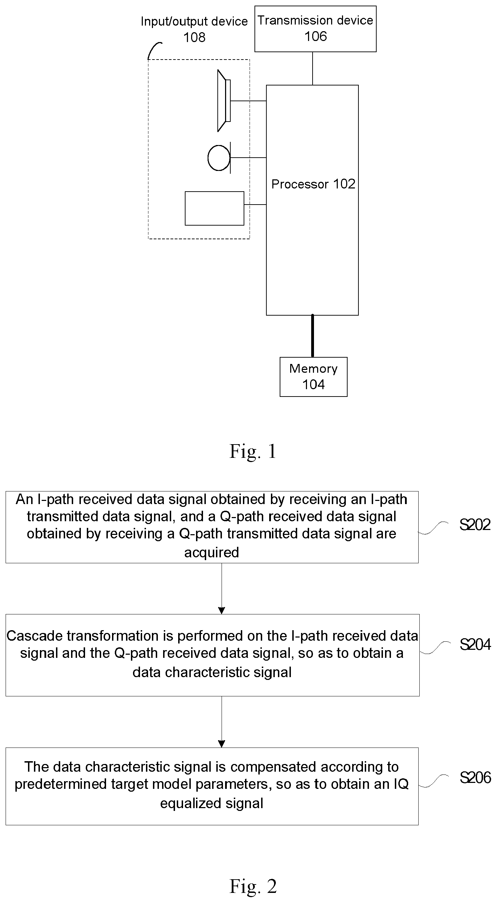

A method embodiment provided in the embodiments of the present invention may be executed in a mobile terminal, a computer terminal, or a similar computing apparatus. Taking running on the mobile terminal as an example, Fig. 1 is a block diagram of a hardware structure of a mobile terminal of a signal compensation processing method according to an embodiment of the present invention, as shown in Fig. 1, the mobile terminal may include one or more (only one is shown in the figure) processors 102 (the processor 102 may include, but is not limited to, a processing apparatus, such as a micro-programmed control unit ( MCU) or a programmable logic device (FPGA)), and a memory 104 for storing data, wherein the mobile terminal may also include a transmission device 106 for a communication function, and an input and output device 108. Those ordinary skilled in the art may understand that, the structure shown in Fig. 1 is merely schematic, and does not constitute a limitation to the structure of the mobile terminal. For example, the mobile terminal may also include more or fewer components than shown in Fig. 1, or have a different configuration as shown in Fig. 1.

The memory 104 may be used for storing a computer program, for example, a software program and a module of application software, such as a computer program corresponding to the data processing method in the embodiments of the present invention, and the processor 102 executes various functional applications and data processing, that is, implements the foregoing method, by means of running the computer program stored in the memory 104. The memory 104 may include a high-speed random access memory, and may also include a non-volatile memory, such as one or more magnetic storage apparatuses, a flash memory, or other non-volatile solid-state memories. In some instances, the memory 104 may further include memories that are arranged remotely relative to the processor 102, and these remote memories may be connected to the mobile terminal by means of a network. Instances of the network include, but are not limited to, the Internet, an intranet, a local area network, a mobile communication network, and combinations thereof.

The transmission device 106 is used for receiving or sending data by means of a network. A specific instance of the network may include a wireless network provided by a communication provider of the mobile terminal. In one instance, the transmission device 106 includes a network interface controller (Network Interface Controller, referred to as NIC), which may be connected to other network devices by means of a base station, so as to communicate with the Internet. In one instance, the transmission device 106 may be a radio frequency (Radio Frequency, referred to as RF) module, which is used for communicating with the Internet in a wireless manner.

In the present embodiment, a signal compensation processing method running on the mobile terminal or a network architecture is provided, Fig. 2 is a flowchart of a signal compensation processing method according to an embodiment of the present invention, and as shown in Fig. 2, the process includes the following steps:

Step S202, an I-path received data signal obtained by receiving an I-path transmitted data signal, and a Q-path received data signal obtained by receiving a Q-path transmitted data signal are acquired.

Step S204, cascade transformation is performed on the I-path received data signal and the Q-path received data signal, so as to obtain a data characteristic signal.

In an embodiment, the step of performing cascade transformation on the I-path received data signal and the Q-path received data signal, so as to obtain the data characteristic signal includes:
In the present embodiment, the step S204 may specifically include: the I-path received data signal and the Q-path received data signal are respectively sampled according to a window length taps, so as to obtain N groups of I-path sampled signals and N groups of Q-path sampled signals, wherein for the N groups of I-path sampled signals and the N groups of Q-path sampled signals, the central signal of each group of sampled signals is the current sampling point, (taps-1)/2 points on the left side of the central signal are (taps-1)/2sampling points, which are intercepted forward from the current sampling point, (taps-1)/2 points on the right side of the central signal are (taps-1)/2sampling points, which are intercepted backward from the current sampling point, if the forward or backward sampling points are less than (taps-1)/2, 0 is compensated, the taps is an odd number, and N represents the length of the I-path received data signal and the Q-path received data signal; and the N groups of I-path sampled signals and the N groups of Q-path sampled signals of which the lengths are the taps are respectively cascaded, so as to obtain the data characteristic signal including N signals of which the lengths are 2 taps.

Step S206, the data characteristic signal is compensated according to predetermined target model parameters, so as to obtain an IQ equalized signal.

In the steps S202 to S206, by means of acquiring the I-path received data signal obtained by receiving the I-path transmitted data signal, and the Q-path received data signal obtained by receiving the Q-path transmitted data signal; performing cascade transformation on the I-path received data signal and the Q-path received data signal, so as to obtain the characteristic signal; and compensating the data characteristic signal according to the predetermined target model parameters, so as to obtain the IQ equalized signal, the problem in the related art of a high bit error rate for mutual influence between IQ signals in optical communication can be solved. The data characteristic signal, which is obtained by performing cascade transformation on the IQ received data signals, is compensated on the basis of the predetermined target model parameters, so as to obtain the IQ equalized signal, thereby reducing the bit error rate of the IQ signals.

In an embodiment, the step S206 may specifically include:
S2061, the data characteristic signal is mapped according to the target model parameters, so as to obtain an I-path linear data signal, a Q-path linear data signal, an I-path nonlinear data signal, and a Q-path nonlinear data signal;

In an embodiment, the step S2061 may specifically include the following steps:

the linear crosstalk of an I-path optical signal of the data characteristic signal is processed according to the target model parameters, so as to obtain the I-path linear data signal, specifically, linear mapping on the data characteristic signal is performed according to the target model parameters in the following manner, so as to obtain the I-path

$$l_I^{'}(t) = \hat{W}_1^T \times k^{'}(t) + \vec{\hat{b}}_1$$

linear data signal: , wherein $1 \le t \le N$, and N represents the length of the data characteristic signal;

the linear crosstalk of a Q-path optical signal of the data characteristic signal is processed according to the target model parameters, so as to obtain the Q-path linear data signal, specifically, linear mapping on the data characteristic signal is performed according to the target model parameters in the following manner, so as to obtain the Q-path linear data signal: $l_Q^{'}(t) = \hat{W}_2^T \times k^{'}(t) + \vec{\hat{b}}_2$ ; and

the crosstalk between two IQ paths of optical signals of the data characteristic signal is processed according to the target model parameters, so as to obtain the I-path nonlinear data signal and the Q-path nonlinear data signal, and specifically, nonlinear mapping on the data characteristic signal is performed according to the target model parameters in the following manner, so as to obtain the I-path nonlinear data signal and the Q-path nonlinear data signal:

$$\begin{bmatrix} n_I^{'}(t) \\ n_Q^{'}(t) \end{bmatrix} = \hat{W}_3^{(0)T} f(\hat{W}_3^{(2)T} f(\hat{W}_3^{(1)T} k^{'}(t) + \vec{\hat{b}}_3^{(1)}) + \vec{\hat{b}}_3^{(2)}) + \vec{\hat{b}}_3^{(0)}$$

, wherein

$\hat{W}_1^T$ , $\hat{W}_2^T$ , $\vec{\hat{b}}_1$ , $\vec{\hat{b}}_2$ , $\hat{W}_3^{(0)T}$ , $\hat{W}_3^{(2)T}$ , $\hat{W}_3^{(1)T}$ , $\vec{\hat{b}}_3^{(1)}$ , $\vec{\hat{b}}_3^{(2)}$ and $\vec{\hat{b}}_3^{(0)}$ represent the target model parameters, and *f(x)* represents an activation function; and

S2062, a sum of the I-path linear data signal and the I-path nonlinear data signal is determined to be an I-path equalized signal, and a sum of the Q-path linear data signal and the Q-path nonlinear data signal is determined to be a Q-path equalized signal, wherein the IQ equalized signal includes the I-path equalized signal and the Q-path equalized signal.

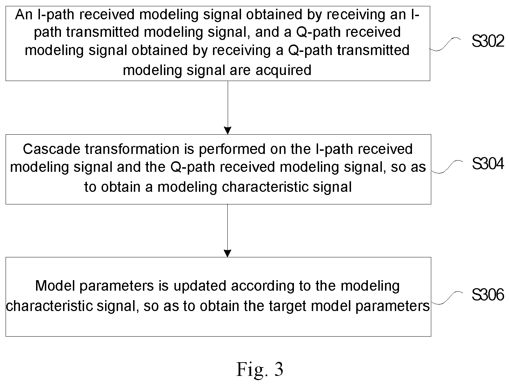

Fig. 3 is a flowchart of a signal compensation processing method according to the present preferred embodiment, as shown in Fig. 3, before the cascade transformation on the IQ received data signals is performed obtained by receiving the IQ transmitted data signals, so as to obtain the data characteristic signal, the method further includes:

step S302, an I-path received modeling signal obtained by receiving an I-path transmitted modeling signal, and a Q-path received modeling signal obtained by receiving a Q-path transmitted modeling signal are acquired.

Step S304, cascade transformation is performed on the I-path received modeling signal and the Q-path received modeling signal, so as to obtain a modeling characteristic signal.

The step S304 may specifically include: the I-path received modeling signal and the Q-path received modeling signal are respectively sampled according to the window length taps, so as to obtain N groups of I-path sampled signals and N groups of Q-path sampled signals, wherein for the N groups of I-path sampled signals and the N groups of Q-path sampled signals, the central signal of each group of sampled signals is the current sampling point, (taps-1)/2 points on the left side of the central signal are (taps-1)/2sampling points, which are intercepted forward from the current sampling point, (taps-1)/2 points on the right side of the central signal are (taps-1)/2 sampling points, which are intercepted backward from the current sampling point, if the forward or backward sampling points are less than (taps-1)/2, 0 is compensated, the taps is an odd number, and N represents the length of the I-path received modeling signal and the Q-path received modeling signal; and the N groups of I-path sampled signals and the N groups of Q-path sampled signals of which the lengths are the taps are respectively cascaded, so as to obtain the modeling characteristic signal including N signals of which the lengths are 2 taps.

Step S306, model parameters is updated according to the modeling characteristic signal, so as to obtain the target model parameters.

In the present embodiment, the step S306 may specifically include the following steps:

the following steps are repeatedly executed until the number of iterations t satisfies a preset iteration condition, and the updated model parameters is determined to be the target model parameters:

when t=0, the model parameters is initialized, the modeling characteristic signal is mapped according to the model parameters, so as to obtain an I-path linear modeling signal, a Q-path linear modeling signal, an I-path nonlinear modeling signal and a Q-path nonlinear modeling signal; further, the linear crosstalk of an I-path optical signal of the modeling characteristic signal is processed according to the model parameters, so as to obtain the I-path linear modeling signal, and specifically, linear mapping on the modeling characteristic signal is performed according to

$$l_I(t) = \mathbf{W}_1^{\mathbf{T}} \times k(t) + \vec{b}_1$$

the model parameters in the following manner, so as to obtain the I-path linear modeling signal:

, wherein $1 \leq t \leq N$, and N represents the length of the modeling characteristic signal; the linear crosstalk of a Q-path optical signal of the modeling characteristic signal is processed according to the model parameters, so as to obtain the Q-path linear modeling signal, and specifically, linear mapping on the modeling characteristic signal is performed according to the model parameters in the following manner, so as to obtain the Q-path linear modeling

signal: $l_Q(t) = \mathbf{W}_2^{\mathbf{T}} \times k(t) + \vec{b}_2$ ; the crosstalk between two IQ paths of optical signals of the modeling characteristic signal is processed according to the model parameters, so as to obtain the I-path nonlinear modeling signal and the Q-path nonlinear modeling signal, and specifically, nonlinear mapping on the modeling characteristic signal is performed according to the model parameters in the following manner, so as to obtain the I-path nonlinear modeling signal and the Q-path nonlinear modeling signal: $\begin{bmatrix} n_I(t) \\ n_Q(t) \end{bmatrix} = \mathbf{W}_3^{(o)T} f(\mathbf{W}_3^{(2)T} f(\mathbf{W}_3^{(1)T} k(t) + \vec{b}_3^{(1)}) + \vec{b}_3^{(2)}) + \vec{b}_3^{(0)}$ , where-

in $\mathbf{W}_1^{\mathbf{T}}$, $\mathbf{W}_2^{\mathbf{T}}$, $\vec{b}_1, \vec{b}_2$, $\mathbf{W}_3^{(1)T}, \mathbf{W}_3^{(2)T}, \mathbf{W}_3^{(o)T}$, $\vec{b}_3^{(1)}$, $\vec{b}_3^{(2)}$ and $\vec{b}_3^{(0)}$ represent the model parameters, and represents the activation function;

addition processing is performed according to the I-path linear modeling signal and the I-path nonlinear modeling signal, so as to obtain an I-path modeling output signal, and addition processing is performed according to the Q-path linear modeling signal and the Q-path nonlinear modeling signal, so as to obtain a Q-path modeling output signal; and

the model parameters is updated according to the I-path transmitted modeling signal, the Q-path transmitted modeling signal, the I-path modeling output signal and the Q-path modeling output signal, so as to obtain updated model parameters, wherein the IQ transmitted modeling signal includes the I-path transmitted modeling signal and the Q-path transmitted modeling signal, wherein,

$$t=t+1.$$

In the present embodiment, the processing process is divided into two stages of model establishment or training, and signal reception and compensation, the switching between the two stages may be indicated by a flag bit, for example, if the flag bit is 0 or false, model establishment or training is executed, if the flag bit is 1 or true, signal reception and compensation are executed, the preset iteration condition may be implemented by the flag bit or in other manners, for example, a sequence is trained at a fixed length, the parameters converge to a certain error, and the like.

In an embodiment, the step of updating the model parameter to obtain the updated model parameters may specifically include:

a signal output error is determined according to the I-path transmitted modeling signal, the Q-path transmitted modeling signal, the I-path modeling output signal and the Q-path modeling output signal, and specifically, the signal output error is determined according to the I-path transmitted modeling signal, the Q-path transmitted modeling signal, the I-path modeling output signal and the Q-path modeling output signal in the following manner:

$$r(t) = \frac{1}{N} \sum_{a=1}^{N} (|p_I(a) - s_I(a)|^2 + |p_Q(a) - s_Q(a)|^2)$$

, wherein $r(t)$ represents the signal output error, $p_I(a)$ represents the I-path modeling output signal, $p_Q(a)$ represents the Q-path modeling output signal, $s_I(a)$ represents the I-path transmitted modeling signal, $s_Q(a)$ represents the Q-path transmitted modeling signal, and N represents the length of the modeling characteristic signal;

the model parameters is updated according to the signal output error, so as to obtain the updated model parameters, further, a partial derivative of the signal output error for the model parameters is respectively determined, so as to obtain a target matrix having the same dimension as the model parameters, and the model parameter is updated according to the target matrix, so as to obtain the updated model parameters, wherein an update parameter is specifically determined in the following manner:

$$H(t) = \alpha \cdot \mathbf{M}'(t) / (\sqrt{\mathbf{V}'(t)} + \varepsilon) ,$$

$$\mathbf{M}'(t) = \mathbf{M}(t) / (1 - \beta_1^t) ,$$

$$\mathbf{V}'(t) = \mathbf{V}(t) / (1 - \beta_2^t) ,$$

$$\mathbf{M}(t) = \beta_1 \mathbf{M}(t-1) + (1 - \beta_1) \mathbf{G}(t) ,$$

$$\mathbf{V}(t) = \beta_2 \mathbf{V}(t-1) + (1 - \beta_2) \mathbf{G}^2(t) ,$$

wherein $H(t)$ represents the update parameter, $\mathbf{M}(t)$ represents a momentum matrix, $\mathbf{V}(t)$ represents a velocity matrix, $\mathbf{G}(t)$ represents the target matrix, $\alpha=0.001$ , $\beta_1=0.9$ , $\beta_2=0.999$ , $\varepsilon=10^{-8}$ , $\mathbf{M}(-1)=0, \mathbf{V}(-1)=0$ , $0 \leq t \leq t_{max}$, $t_{max}$ represents a threshold value of the preset number of iterations, and the differences between the model parameters and the update parameter are determined to be the updated model parameters.

An input signal in the present embodiment has memorability, joint compensation and estimation are performed by means of recording several front and back symbols, three branches are utilized, one branch processes the linear crosstalk of the I-path optical signal, one branch processes the linear crosstalk of the Q-path optical signal, and two linear branches may be a linear weighted network of MLP; and there still one branch to process the crosstalk between the two IQ paths of optical signals. Since the mutual crosstalk between the IQ optical signals is not very complex, the non-linearity may be trained by using a network with two hidden layers, such that the complexity of the system is greatly reduced. An I-path linear output is added with an I-path nonlinear output, and a Q-path linear output is added with a Q-path nonlinear output at an output end, and the obtained compensation signal not only equalizes linear distortion, but also equalizes nonlinear distortion, thereby achieving a good effect. This method is also applicable to two IQ paths of wireless signals having crosstalk and having the same or similar architecture, and thus details are not described herein again. By using the present embodiment, the performance of the system can be effectively improved. By using the equalization method provided in the present embodiment, in the case of two transmitting end powers, a working interval can be improved by 2.33 to 8 times or more. At the same time, it is possible to achieve the improvement of a 3.63 dB Q value at most.

The present embodiment will be described in detail below by taking it as an example that the switching between model establishment and signal compensation is indicated by a flag bit.

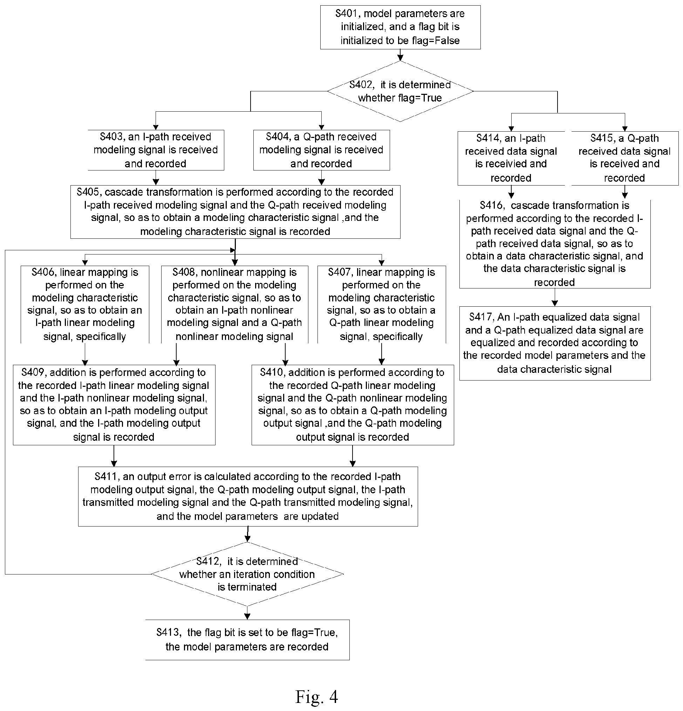

Fig. 4 is a flowchart of a method for receiving and compensating IQ signals according to an embodiment of the present invention. As shown in Fig. 4, the method may include the following steps:

Step 401, model parameters are initialized, and a flag bit is initialized to be flag=False, specifically:

the number of model hidden layers is set to be 2, the number of nodes of the first hidden layer is set to be $H_1$, the number of nodes of the second hidden layer is set to be $H_2$, the activation function is set to be $f(x)$, the windows of I-path and Q-path signals of an input layer are respectively set to be taps, the initial values of the number of nodes in each hidden layer is set, weight matrices $\mathbf{W}_1^{\mathrm{T}}, \mathbf{W}_2^{\mathrm{T}}, \mathbf{W}_3^{(1)T}, \mathbf{W}_3^{(2)T}, \mathbf{W}_3^{(o)T}$ and bias vectors $\vec{b_1}, \vec{b_2}, \vec{b_3^{(1)}}, \vec{b_3^{(2)}}$ and $\vec{b_3^{(o)}}$ to be random matrices or vectors conforming to 0-mean Gaussian distribution, the number of iterations $epoch = 0$ and an iteration termination value $epoch\_max$ are initialized, and the flag bit is initialized to be flag=False, wherein the dimensions of the weight matrices and the bias vectors are shown in Table 1.

Table 1

| Project | Row dimension | Column dimension |
| --- | --- | --- |
| $\mathbf{W}_1$ | 2*taps | 1 |
| $\mathbf{W}_2$ | 2*taps | 1 |
| $\mathbf{W}_3^{(1)}$ | 2*taps | $H_1$ |
| $\mathbf{W}_3^{(2)}$ | $H_1$ | $H_2$ |
| $\mathbf{W}_3^{(o)}$ | $H_2$ | 1 |
| $\vec{b}_1$ | 1 | 1 |
| $\vec{b}_2$ | 1 | 1 |
| $\overrightarrow{b_3^{(1)}}$ | $H_1$ | 1 |
| $\overrightarrow{b_3^{(2)}}$ | $H_2$ | 1 |
| $\overrightarrow{b_3^{(o)}}$ | 1 | 1 |

Step 402, it is determined whether flag=True, and if flag=False, proceed to step 403; and if flag=True, proceed to step 414.

Step 403, an I-path received modeling signal is received and recorded, wherein a transmitting end loads an original transmitted modeling signal $s(t)$, and the original transmitted modeling signal $s(t)$ is specifically loaded by a transmitted modeling signal loading apparatus; the original transmitted modeling signal is modulated and recorded as an I-path transmitted modeling signal, wherein $s(t)$ is specifically modulated by an I-path transmitted modeling signal transmitting apparatus, and the I-path transmitted modeling signal $x_I(t)$ is recorded; the original transmitted modeling signal is modulated and recorded as a Q-path transmitted modeling signal, wherein $s(t)$ is specifically modulated by a Q-path transmitted modeling signal transmitting apparatus, and the Q-path transmitted modeling signal $x_Q(t)$ is recorded.

Specifically, $x_I(t)$ is received and recorded by an I-path modeling signal receiving apparatus, so as to obtain the I-path received modeling signal $y_I(t)$.

Step 404, a Q-path received modeling signal is received and recorded, specifically:
$x_I(t)$ is received and recorded by means of a Q-path modeling signal receiving apparatus, so as to obtain the Q-path received modeling signal $y_I(t)$.

Step 405, cascade transformation is performed according to the recorded I-path received modeling signal and the Q-path received modeling signal, so as to obtain a modeling characteristic signal and the modeling characteristic signal is recorded.

Specifically, cascade transformation is performed on $y_I(t)$ and $y_I(t)$ by means of a modeling cascade transformation apparatus, so as to obtain the modeling characteristic signal $k(t)$. The I-path received data signal and the Q-path received data signal are respectively sampled according to the window length taps, so as to obtain N groups of I-path sampled signals and N groups of Q-path sampled signals, wherein for the N groups of I-path sampled signals and the N groups of Q-path sampled signals, the central signal of each group of sampled signals is the current sampling point, (taps-1)/2 points on the left side of the central signal are (taps-1)/2 sampling points, which are intercepted forward from the current sampling point, (taps-1)/2 points on the right side of the central signal are (taps-1)/2 sampling points, which are intercepted backward from the current sampling point, if the forward or backward sampling points are less than (taps-1)/2, 0 is compensated, the taps is an odd number, and N represents the length of the I-path received data signal and the Q-path received data signal; and the N groups of I-path sampled signals and the N groups of Q-path sampled signals of which the lengths are the taps are respectively cascaded, so as to obtain the data characteristic signal including N signals of which the lengths are 2 taps. The specific transformation manner is:

$$k(1) = [0,...,0, y_I(1),..., y_I(1 + \frac{(taps-1)}{2}), 0,...,0, y_Q(1),..., y_Q(1 + \frac{(taps-1)}{2})]^T$$

$$k(2) = [0,..., y_I(1), y_I(2),..., y_I(2 + \frac{(taps-1)}{2}), 0,..., y_Q(1), y_Q(2),..., y_Q(2 + \frac{(taps-1)}{2})]^T$$

.
.
.

$$k(\frac{(taps-1)}{2} + 1) = [y_I(1),..., y_I(\frac{(taps-1)}{2} + 1),..., y_I(taps), y_Q(1),..., y_Q(\frac{(taps-1)}{2} + 1),..., y_Q(taps)]^T$$

$$k(\frac{(taps-1)}{2} + 2) = [y_I(2),..., y_I(\frac{(taps-1)}{2} + 2),..., y_I(taps+1), y_Q(2),..., y_Q(\frac{(taps-1)}{2} + 2),..., y_Q(taps+1)]^T$$

.
.
.

$$k(N - \frac{(taps-1)}{2}) = [y_I(N - taps + 1),..., y_I(N - \frac{(taps-1)}{2}),..., y_I(N), y_Q(N - taps + 1),..., y_Q(N - \frac{(taps-1)}{2}),..., y_Q(N)]^T$$

$$k(N - \frac{(taps-1)}{2} + 1) = [y_I(N - taps + 2),..., y_I(N - \frac{(taps-1)}{2} + 1),..., y_I(N), 0, y_Q(N - taps + 2),...,$$

$$y_Q(N - \frac{(taps-1)}{2} + 1),..., y_Q(N), 0]^T$$

.
.
.

$$k(N) = [y_I(N - \frac{(taps-1)}{2}),..., y_I(N), 0,...,0, y_Q(N - \frac{(taps-1)}{2}),..., y_Q(N), 0,...,0]^T$$

, wherein each $k(t)$ is a column vector having a length of 2*taps. After the transformation in this step, the signal has memorability at this time, that is, each path of signal input to the next stage includes respective taps/2-1 signals at front and back. Each module using the signal as an output has memorability.

Step 406, linear mapping is performed on the modeling characteristic signal, so as to obtain an I-path linear modeling signal, specifically:

the I-path linear modeling signal is obtained by means of an I-path linear mapping module and $k(t)$:

$$l_I(t) = \mathbf{W_1^T} \times k(t) + \vec{b_1}, \quad 1 \leq t \leq N .$$

Step 407, linear mapping is performed on the modeling characteristic signal, so as to obtain a Q-path linear modeling signal, specifically:

the Q-path linear modeling signal is obtained by means of a Q-path linear mapping module and $k(t)$:

$$l_Q(t) = \mathbf{W}_2^{\mathbf{T}} \times k(t) + \vec{b}_2 \quad .$$

Step 408, nonlinear mapping is performed on the modeling characteristic signal, so as to obtain an I-path nonlinear modeling signal and a Q-path nonlinear modeling signal, specifically:

the I-path nonlinear modeling signal and the Q-path nonlinear modeling signal are obtained by means of a nonlinear mapping module and $k(t)$:

$$\begin{bmatrix} n_I(t) \\ n_Q(t) \end{bmatrix} = \mathbf{W}_3^{(o)T} f(\mathbf{W}_3^{(2)T} f(\mathbf{W}_3^{(1)\mathbf{T}} k(t) + \vec{b}_3^{(1)}) + \vec{b}_3^{(2)}) + \vec{b}_3^{(0)}$$

$$f(x) = \begin{cases} x, x > 0 \\ 0, x \le 0 \end{cases}$$

wherein $f(a)$ represents the activation function, and the expression of which may be .

Here, $x$ may be a scalar, a vector or a matrix, and the dimension of $f(x)$ may be the same as $x$. When $x$ is a matrix or a vector, $f(x)$ represents to use the above formula for each element in the matrix or vector.

Step 409, addition is performed according to the recorded I-path linear modeling signal and the I-path nonlinear modeling signal, so as to obtain an I-path modeling output signal, and the I-path modeling output signal is recorded.

Specifically, the I-path linear modeling signal and the I-path nonlinear modeling signal are added by means of an I-path adding module, so as to obtain the I-path modeling output signal

$$p_I(t) = l_I(t) + n_I(t), 1 \le t \le N \quad .$$

Step 410, addition is performed according to the recorded Q-path linear modeling signal and the Q-path nonlinear modeling signal, so as to obtain a Q-path modeling output signal and the Q-path modeling output signal is recorded.

Specifically, the Q-path linear modeling signal and the Q-path nonlinear modeling signal are added by means of a Q-path adding module, so as to obtain the Q-path modeling output signal

$$p_Q(t) = l_Q(t) + n_Q(t), 1 \le t \le N \quad .$$

Step 411, an output error is calculated according to the recorded I-path modeling output signal, the Q-path modeling output signal, the I-path transmitted modeling signal and the Q-path transmitted modeling signal, and the model parameters $\mathbf{W}_1^{\mathbf{T}}, \mathbf{W}_2^{\mathbf{T}}, \mathbf{W}_3^{(1)T}, \mathbf{W}_3^{(2)T}, \mathbf{W}_3^{(o)T}$, $\vec{b}_1, \vec{b}_2,$ $\vec{b}_3^{(1)}$ $\vec{b}_3^{(2)}$ and $\vec{b}_3^{(0)}$ are updated.

Specifically, the model parameters are updated by an error calculation and model parameter update module, and the specific steps are:

(1) parameters $\alpha=0.001$, $\beta_1=0.9$, $\beta_2=0.999$ and $\varepsilon=10^{-8}$ are initialized, the momentum matrix $\mathbf{M}(-1) = 0$ and the velocity matrix $\mathbf{V}(-1) = 0$, $t = 0$ are initialized, and the maximum number of iterations is set to be $t_{max}$.

(2) all model parameters in step (1) are updated as follows, which will be described below with $\mathbf{W}_3^{(1)T}$ as an example.

set $r(t) = \frac{1}{N} \sum_{a=1}^{N} (|p_I(a) - s_I(a)|^2 + |p_Q(a) - s_Q(a)|^2)$ ;

a partial derivative of $r(t)$ to $\mathbf{W}_3^{(1)T}$ is calculated, so as to obtain a matrix $\mathbf{G}(t)$ having the same dimension as $\mathbf{W}_3^{(1)T}$ ;

$$\mathbf{M}(t) = \beta_1 \mathbf{M}(t-1) + (1-\beta_1)\mathbf{G}(t) ,$$

$\mathbf{V}(t)=\beta_2\mathbf{V}(t-1)+(1-\beta_2)\mathbf{G}^2(t)$, wherein $\mathbf{G}^2(t)$ represents a dot product of the element of the matrix $\mathbf{G}(t)$;

$$\mathbf{M}'(t) = \mathbf{M}(t)/(1-\beta_1^t)\ ;$$

$$\mathbf{V}'(t) = \mathbf{V}(t)/(1-\beta_2^t)\ ;$$

update $\qquad \mathbf{W}_3^{(1)T} \leftarrow \mathbf{W}_3^{(1)T} - \alpha \cdot \mathbf{M}'(t)/(\sqrt{\mathbf{V}'(t)}+\varepsilon)$ ;

if $t = t_{max}$, then proceed to step 411 (3), and otherwise t=t+1, repeat the above steps.

(3) If all model parameters have been updated, proceed to step 412, and otherwise proceed to step (1) in step 411.

Step 412, it is determined whether an iteration condition is terminated, if so, execute step 413, otherwise, add 1 to the number of iterations, and return to steps 406, 407 and 408.

Step 413, the flag bit is set to be flag=True, the model parameters are recorded, and proceed to step 402.

If the number of iterations reaches the maximum number of iterations, by means of an equalization apparatus, the model parameters $\mathbf{W}_1^T, \mathbf{W}_2^T, \mathbf{W}_3^{(1)T}, \mathbf{W}_3^{(2)T}, \mathbf{W}_3^{(o)T}$, $\vec{b}_1$, $\vec{b}_2$, $\vec{b}_3^{(1)}$, $\vec{b}_3^{(2)}$ and $\vec{b}_3^{(0)}$ are recorded to be $\hat{W}_1^T$, $\hat{W}_2^T$, $\hat{W}_3^{(1)T}$, $\hat{W}_3^{(2)T}$, $\hat{W}_3^{(0)T}$, $\vec{\hat{b}}_1$, $\vec{\hat{b}}_2$, $\vec{\hat{b}}_3^{(1)}$, $\vec{\hat{b}}_3^{(2)}$ and $\vec{\hat{b}}_3^{(0)}$.

Step 414, an I-path received data signal is received and recorded, wherein the transmitting end loads an original transmitted data signal $s'(t)$, and the original transmitted data signal $s'(t)$ is specifically loaded by a transmitted data signal loading apparatus; the original transmitted data signal is modulated and recorded the same as an I-path transmitted data signal, wherein $s'(t)$ is specifically modulated by an I-path data signal transmitting apparatus, and the I-path transmitted modeling signal $x_I'(t)$ is recorded; and the original transmitted data signal is modulated and recorded the same as a Q-path transmitted data signal, wherein $s'(t)$ is specifically modulated by a Q-path data signal transmitting apparatus, and the Q-path transmitted modeling signal $x_Q'(t)$ is recorded.

Specifically, $x_I'(t)$ is received and recorded by an I-path data signal receiving apparatus, so as to obtain the I-path received modeling signal $y_I'(t)$.

Step 415, a Q-path received data signal is received and recorded, specifically:
$x_Q'(t)$ is received and recorded by means of a Q-path data signal receiving apparatus, so as to obtain the Q-path received modeling signal $y_Q'(t)$.

Step 416, cascade transformation is performed according to the recorded I-path received data signal and the Q-path received data signal, so as to obtain a data characteristic signal, and the data characteristic signal is recorded. Specifically, cascade transformation is performed on $y_I'(t)$ and $y_Q'(t)$ $y_I(t)$ by the data cascade transformation apparatus, so as to obtain a data characteristic signal $k'(t)$. The specific transformation manner is similar to the step 405, and thus details are not described herein again.

Step 417, an I-path equalized data signal $q_I'(t)$ and a Q-path equalized data signal $q_Q'(t)$ are equalized and recorded according to the recorded model parameters and the data characteristic signal. Specifically, the data characteristic signal is equalized by means of the equalization apparatus, so as to obtain the I-path equalized data signal $q_I'(t)$ and the Q-path equalized data signal $q_Q'(t)$, and the specific manner is:

$$l_I'(t) = \hat{W}_1^T \times k'(t) + \vec{\hat{b}}_1\ ;$$

$$l_Q'(t) = \hat{W}_2^T \times k'(t) + \vec{\hat{b}}_2\ ;$$

$$\begin{bmatrix} n_I'(t) \\ n_Q'(t) \end{bmatrix} = \hat{W}_3^{(0)T} f(\hat{W}_3^{(2)T} f(\hat{W}_3^{(1)T} k'(t) + \vec{\hat{b}}_3^{(1)}) + \vec{\hat{b}}_3^{(2)}) + \vec{\hat{b}}_3^{(0)}\ ;$$

and

$$\begin{bmatrix} q_I{}'(t) \\ q_Q{}'(t) \end{bmatrix} = \begin{bmatrix} n_I{}'(t) + l_I{}'(t) \\ n_Q{}'(t) + l_Q{}'(t) \end{bmatrix}, 1 \le t \le N .$$

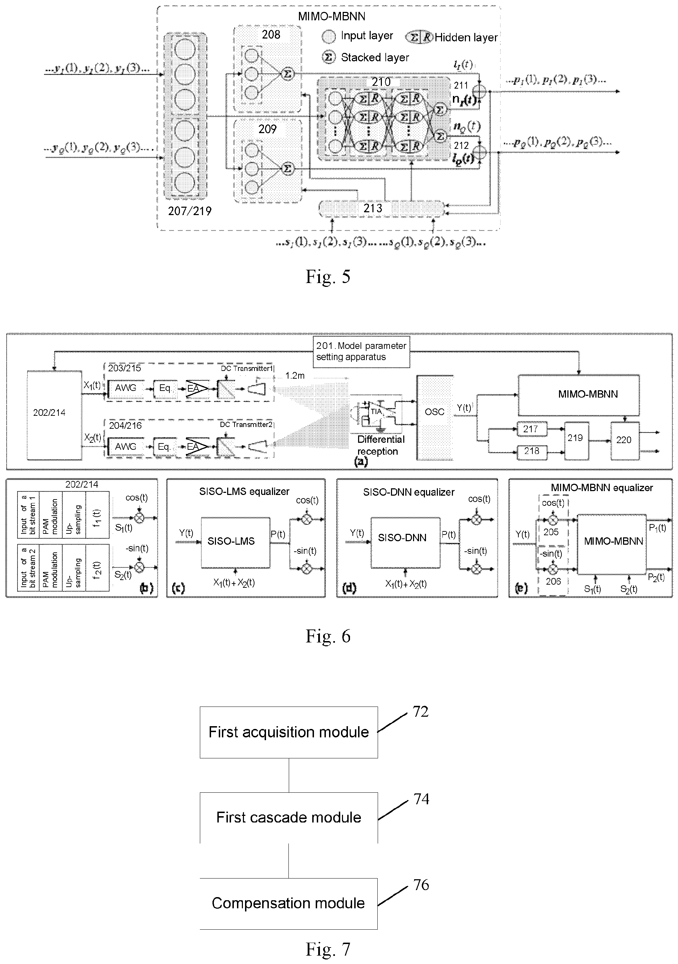

Based on the equalization method and a multi-input multi-output multi-branch neural network equalizer of a heterogeneous deep neural network provided in the present embodiment, Fig. 5 is a schematic diagram of a multi-input multi-output multi-branch neural network equalizer of a heterogeneous deep neural network according to an embodiment of the present invention. As shown in Fig. 5, the output end respectively adds the linear and nonlinear outputs of the I path and the linear and nonlinear outputs of the Q path by means of two adding modules (an I-path adding module 211 and a Q-path adding module 212), and then outputs. After the modeling process is completed, storage parameters are not updated anymore. At this time, the multi-input and multi-output multi-branch neural network is transformed into an equalization apparatus (220) for equalizing the characteristic signal in step 417, so as to obtain an I-path equalized signal and a Q-path equalized signal. For a traditional rear equalizer minimum mean square error equalizer (SISO-LMS), a deep neural network (SISO-DNN) equalizer, and the heterogeneous deep neural network equalizer proposed in the present embodiment, a verification experiment is performed in a single receiver IQ optical communication system. Fig. 6 is a schematic diagram of a verification experiment platform according to an embodiment of the present invention, as shown in Fig. 6, at first, a transmitted modeling signal loading apparatus (202) loads an original transmitted modeling signal, and generates I-path and Q-path transmitted modeling signals by means of I-path and Q-path modeling signal transmitting apparatuses (203, 204), and the I-path and Q-path signals are received by means of I-path and Q-path modeling signal receiving apparatuses (205, 206) after being superposed at a receiving end, so as to obtain I-path and Q-path received modeling signals. Subsequently, a modeling cascade transformation apparatus (207) in the multi-input and multi-output multi-branch neural network performs modeling cascade transformation of step 402 on the I-path and Q-path received modeling signals, so as to obtain a modeling characteristic signal. Then, the modeling characteristic signal is transformed by I-path and Q-path linear mapping modules (208, 209) and a nonlinear mapping module (210), so as to obtain I-path and Q-path linear modeling signals and I-path and Q-path nonlinear modeling signals, and then an I-path modeling output signal and a Q-path modeling output signal are obtained by means of the I-path and Q-path adding modules. Afterwards, by means of the I-path and Q-path transmitted modeling signals and the I-path and Q-path modeling output signals, the parameters in the model are updated by the algorithm in step 412 until reaching the maximum number of iterations. Then, the model parameters are fixed, and the equalization apparatus (220) loads the current model parameters. Subsequently, starting from a transmitted data signal loading apparatus (214) in Fig. 6, the above process is repeated until I-path and Q-path data signal apparatuses (217, 218) receive and record I-path and Q-path data signals, and cascade transformation and equalization are performed on the signals by means of a data cascade transformation apparatus (219) and the equalization apparatus (220), so as to finally obtain I-path and Q-path equalized data signals.

The initial parameters of the equalizers are shown in Table 2.

Table 2

| Parameter | SISO-LMS | SISO-DNN | MIMO-MBNN |
|---|---|---|---|
| The length of input layer window(taps) | 53 | 53 | 53×2 |
| The number of nodes ($H_1$) of the first hidden layer | -- | 168 | 136 |
| The number of nodes ($H_2$) of the second hidden layer | -- | 144 | 104 |
| The number of nodes ($H_3$) of the third hidden layer | -- | 88 | -- |
| Activation function ($f(x)$) | -- | Relu | Relu |
| Error and weight update algorithm | LMS | Adam | Adam |
| The total number of parameters | 689 | 46257 | 29224 |

In the table, '--' indicates that the structure cannot be implemented or not used. It can be seen that compared with the traditional SISO-DNN equalization method, the equalization method provided in the present embodiment has fewer parameters, and therefore, the time and space required for training are smaller. Although the parameters of SISO-LMS are the minimum in the three methods, the performance thereof is the worst.

For the equalizers, which are set according to the parameters in Table 2, experiments are performed on a single receiver IQ optical communication platform. When the peak-to-peak value of the I-path signal is 350 mV, Q_factor result maps of the three equalization methods, which are measured by the peak-to-peak value of the Q-path signal, are changed. The greater the Q_factor value is, the better the system performance is. Experimental results show that, when the peak-to-peak value of the Q-path signal is 700 mV, the working range 510 mV of the MIMO-MBNN implemented on the basis of the equalization method provided in the present invention is greatly superior to the working range 170 mV of the system using the traditional equalization algorithms SISO-LMS and SISO-DNN. At the same time, compared with the traditional SISO-LMS and SISO-DNN, the receiving equalization method provided in the present embodiment may bring a maximum of 3.63 dB of Q_factor value performance gain to the system. In the embodiment of the present invention, after the model is trained, the equalized signal can be obtained just by inputting the transformed received signal into the equalization apparatus without other additional operations.

By means of the present embodiment, the problems of poor performance and weak power mismatch resistance of the existing equalization modes in the IQ optical communication system are effectively solved. Compared with the traditional equalization method, the capacity and system performance of the communication system are effectively improved. The present embodiment is also relatively easy to be implemented, once the model is trained, as long as the strength of the signal and the system state are not changed, a received signal may be equalized by using the equalization apparatus without additional operations. After modeling is completed, the equalized signal can be obtained as long as I-path received data and Q-path received data are substituted into the equalization apparatus after cascade transformation is performed thereon, and the equalized signal is used for demodulation, thereby improving the performance of the system.

By means of the descriptions of the above embodiments, those skilled in the art may clearly understand that, the method according to the above embodiments may be implemented by means of software plus a necessary universal hardware platform, and of course, may also be implemented by hardware, but the former is a better embodiment in many cases. Based on this understanding, the technical solutions of the present invention essentially or the part contributing to the prior art may be embodied in the form of a software product, the computer software product is stored in a storage medium (such as an ROM/RAM, a magnetic disk and an optical disk), and include several instructions for instructing a computer device (which may be a mobile phone, a computer, a server, or a network device and the like) to execute the method in various embodiments of the present invention.

A signal compensation processing apparatus is further provided in the present embodiment, the apparatus is used for implementing the above embodiments and preferred embodiments, and what has been described will not be repeated again. As used below, the term "module" may implement a combination of software and/or hardware of predetermined functions. Although the apparatus described in the following embodiments is preferably implemented in software, implementations of hardware, or a combination of software and hardware are also possible and conceivable.

Fig. 7 is a structural block diagram of a signal compensation processing apparatus according to an embodiment of the present invention, as shown in Fig. 7, including:

a first acquisition module 72, configured to acquire an I-path received data signal obtained by receiving an I-path transmitted data signal, and a Q-path received data signal obtained by receiving a Q-path transmitted data signal;

a first cascade module 74, configured to perform cascade transformation on the I-path received data signal and the Q-path received data signal, so as to obtain a data characteristic signal; and

a compensation module 76, configured to compensate the characteristic signal according to predetermined target model parameters, so as to obtain an IQ equalized signal.

In an embodiment, the compensation module 76 includes:

a mapping sub-module, configured to map the data characteristic signal according to the target model parameters, so as to obtain an I-path linear data signal, a Q-path linear data signal, an I-path nonlinear data signal, and a Q-path nonlinear data signal; and

a determination sub-module, configured to determine a sum of the I-path linear data signal and the I-path nonlinear data signal to be an I-path equalized signal, and determine a sum of the Q-path linear data signal and the Q-path nonlinear data signal to be a Q-path equalized signal, wherein the IQ equalized signal includes the I-path equalized signal and the Q-path equalized signal.

In an embodiment, the mapping sub-module includes:

a first processing unit, configured to process the linear crosstalk of an I-path optical signal of the data characteristic signal according to the target model parameters, so as to obtain the I-path linear data signal;

a second processing unit, configured to process the linear crosstalk of a Q-path optical signal of the data characteristic signal according to the target model parameters, so as to obtain the Q-path linear data signal; and

a third processing unit, configured to process the crosstalk between two IQ paths of optical signals of the data characteristic signal according to the target model parameters, so as to obtain the I-path nonlinear data signal and the Q-path nonlinear data signal.

In an embodiment, the first processing unit is further configured to perform linear mapping on the data characteristic signal according to the target model parameters in the following manner, so as to obtain the I-path linear data signal:

$$l_I^{'}(t) = \hat{W}_1^T \times k^{'}(t) + \vec{\hat{b}}_1$$

, wherein $1 \leq t \leq N$, and N represents the length of the data characteristic signal; and/or

the second processing unit is further configured to perform linear mapping on the data characteristic signal according to the target model parameters in the following manner, so as to obtain the Q-path linear data signal:

$$l_Q^{'}(t) = \hat{W}_2^T \times k^{'}(t) + \vec{\hat{b}}_2$$

; and/or

the third processing unit is further configured to perform nonlinear mapping on the data characteristic signal according to the target model parameters in the following manner, so as to obtain the I-path nonlinear data signal and the Q-path nonlinear data signal:

$$\begin{bmatrix} n_I^{'}(t) \\ n_Q^{'}(t) \end{bmatrix} = \hat{W}_3^{(0)T} f(\hat{W}_3^{(2)T} f(\hat{W}_3^{(1)T} k^{'}(t) + \vec{\hat{b}}_3^{(1)}) + \vec{\hat{b}}_3^{(2)}) + \vec{\hat{b}}_3^{(0)}$$

;

wherein $\hat{W}_1^T$, $\hat{W}_2^T$, $\vec{\hat{b}}_1$, $\vec{\hat{b}}_2$, $\hat{W}_3^{(0)T}$, $\hat{W}_3^{(2)T}$, $\hat{W}_3^{(1)T}$, $\vec{\hat{b}}_3^{(1)}$, $\vec{\hat{b}}_3^{(2)}$ and $\vec{\hat{b}}_3^{(0)}$ represent the target model parameters, and f(x) represents an activation function.

In an embodiment, the first cascade module includes:

a first sampling sub-module, configured to respectively sample the I-path received data signal and the Q-path received data signal according to a window length taps, so as to obtain N groups of I-path sampled signals and N groups of Q-path sampled signals, wherein for the N groups of I-path sampled signals and the N groups of Q-path sampled signals, the central signal of each group of sampled signals is the current sampling point, (taps-1)/2 points on the left side of the central signal are (taps-1)/2sampling points, which are intercepted forward from the current sampling point, (taps-1)/2 points on the right side of the central signal are (taps-1)/2sampling points, which are intercepted backward from the current sampling point, if the forward or backward sampling points are less than (taps-1)/2, 0 is compensated, the taps is an odd number, and N represents the length of the I-path received data signal and the Q-path received data signal; and

a first cascade sub-module, configured to respectively cascade the N groups of I-path sampled signals and the N groups of Q-path sampled signals of which the lengths are the taps, so as to obtain the data characteristic signal including N signals of which the lengths are 2 taps.

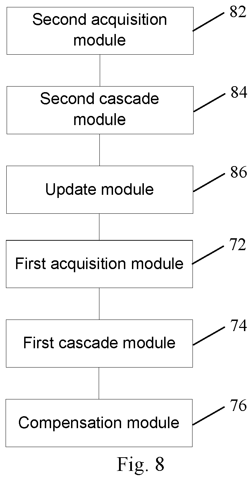

Fig. 8 is a structural block diagram of a signal compensation processing apparatus according to a preferred embodiment of the present invention, and as shown in Fig. 8, the apparatus further includes:

a second acquisition module 82, configured to acquire an I-path received modeling signal obtained by receiving an I-path transmitted modeling signal, and a Q-path received modeling signal obtained by receiving a Q-path transmitted modeling signal;

a second cascade module 84, configured to perform cascade transformation on theI-path received modeling signal and the Q-path received modeling signal, so as to obtain a modeling characteristic signal; and

an update module 86, configured to update model parameters according to the modeling characteristic signal, so as to obtain the target model parameters.

In another embodiment, the second cascade module 84 includes:

a second sampling sub-module, configured to respectively sample the I-path received modeling signal and the Q-path received modeling signal according to the window length taps, so as to obtain N groups of I-path sampled signals and N groups of Q-path sampled signals, wherein for the N groups of I-path sampled signals and the N groups of Q-path sampled signals, the central signal of each group of sampled signals is the current sampling point, (taps-1)/2 points on the left side of the central signal are (taps-1)/2sampling points, which are intercepted forward from the current sampling point, (taps-1)/2 points on the right side of the central signal are (taps-1)/2sampling points, which are intercepted backward from the current sampling point, if the forward or backward sampling points are less than (taps-1)/2, 0 is compensated, the taps is an odd number, and N represents the length of the I-path received modeling signal and the Q-path received modeling signal; and

a second cascade sub-module, configured to respectively cascade the N groups of I-path sampled signals and the N groups of Q-path sampled signals of which the lengths are the taps, so as to obtain the modeling characteristic signal including N signals of which the lengths are 2 taps.

In another embodiment, the update module 86 includes:
an execution sub-module, configured to repeatedly execute the following steps until the number of iterations t satisfies a preset iteration condition, and determine the updated model parameters to be the target model parameters:

a mapping unit configured to, when t=0, initialize the model parameters, map the modeling characteristic signal according to the model parameters, so as to obtain an I-path linear modeling signal, a Q-path linear modeling signal, an I-path nonlinear modeling signal and a Q-path nonlinear modeling signal;

an adding unit, configured to perform addition processing according to the I-path linear modeling signal and the I-path nonlinear modeling signal, so as to obtain an I-path modeling output signal, and perform addition processing according to the Q-path linear modeling signal and the Q-path nonlinear modeling signal, so as to obtain a Q-path modeling output signal; and

an update unit, configured to update the model parameters according to the I-path transmitted modeling signal, the Q-path transmitted modeling signal, the I-path modeling output signal and the Q-path modeling output signal, so as to obtain updated model parameters, wherein the IQ transmitted modeling signal includes the I-path transmitted modeling signal and the Q-path transmitted modeling signal, wherein t=t+1.

In another embodiment, the mapping unit includes:

a first processing sub-unit, configured to process the linear crosstalk of an I-path optical signal of the modeling characteristic signal according to the model parameters, so as to obtain the I-path linear modeling signal;

a second processing sub-unit, configured to process the linear crosstalk of a Q-path optical signal of the modeling characteristic signal according to the model parameters, so as to obtain the Q-path linear modeling signal; and

a third processing sub-unit, configured to process the crosstalk between two IQ paths of optical signals of the modeling characteristic signal according to the model parameters, so as to obtain the I-path nonlinear modeling signal and the Q-path nonlinear modeling signal.

In another embodiment, the first processing sub-unit is further configured to perform linear mapping on the modeling characteristic signal according to the model parameters in the following manner, so as to obtain the I-path linear modeling signal: $l_I(t) = \mathbf{W_1^T} \times k(t) + \vec{b_1}$ , wherein $1 \le t \le N$, and N represents the length of the modeling characteristic signal; and/or

the second processing sub-unit is further configured to perform linear mapping on the modeling characteristic signal according to the model parameters in the following manner, so as to obtain the Q-path linear modeling signal:

$$l_Q(t) = \mathbf{W}_2^{\mathbf{T}} \times k(t) + \vec{b_2}$$ ; and/or

the third processing sub-unit is further configured to perform nonlinear mapping on the modeling characteristic signal according to the model parameters in the following manner, so as to obtain the I-path nonlinear modeling signal

$$\begin{bmatrix} n_I(t) \\ n_Q(t) \end{bmatrix} = \mathbf{W}_3^{(o)T} f(\mathbf{W}_3^{(2)T} f(\mathbf{W}_3^{(1)\mathbf{T}} k(t) + \vec{b_3^{(1)}}) + \vec{b_3^{(2)}}) + \vec{b_3^{(0)}}$$

and the Q-path nonlinear modeling signal: , wherein

$\mathbf{W}_1^{\mathbf{T}}$ , $\mathbf{W}_2^{\mathbf{T}}$ , $\vec{b_1}, \vec{b_2}$, $\mathbf{W}_3^{(1)T}, \mathbf{W}_3^{(2)T}, \mathbf{W}_3^{(o)T}$ , $\vec{b_3^{(1)}}$ , $\vec{b_3^{(2)}}$ and $\vec{b_3^{(0)}}$ represent the model parameters, and $f(x)$ represents the activation function.

In another embodiment, the update unit includes:

a determination sub-unit, configured to determine a signal output error according to the I-path transmitted modeling signal, the Q-path transmitted modeling signal, the I-path modeling output signal and the Q-path modeling output signal; and
an update sub-unit, configured to update the model parameters according to the signal output error, so as to obtain the updated model parameters.

In another embodiment, the update sub-unit is further configured to:

respectively determine a partial derivative of the signal output error for the model parameters, so as to obtain a target matrix having the same dimension as the model parameters, and
update the model parameter according to the target matrix, so as to obtain the updated model parameters.

In another embodiment, the update sub-unit is further configured to:

determine an update parameter in the following manner:

$$H(t) = \alpha \cdot \mathbf{M}'(t) / (\sqrt{\mathbf{V}'(t)} + \varepsilon)$$ ,

$$\mathbf{M}'(t) = \mathbf{M}(t) / (1 - \beta_1^t)$$ ,

$$\mathbf{V}'(t) = \mathbf{V}(t) / (1 - \beta_2^t)$$ ,

$$\mathbf{M}(t) = \beta_1 \mathbf{M}(t-1) + (1 - \beta_1) \mathbf{G}(t)$$ ,

$$\mathbf{V}(t) = \beta_2 \mathbf{V}(t-1) + (1 - \beta_2) \mathbf{G}^2(t)$$ ,

wherein $H(t)$ represents the update parameter, $\mathbf{M}(t)$ represents a momentum matrix, $\mathbf{V}(t)$ represents a velocity matrix, $\mathbf{G}(t)$ represents the target matrix, $\alpha$=0.001, $\beta_1$=0.9 , $\beta_2$=0.999 , $\varepsilon$=10^{-8} , $\mathbf{M}(-1) = 0$ , $\mathbf{V}(-1) = 0$ , $0 \le t \le t_{max}$, $t_{max}$ represents a threshold value of the preset number of iterations; and

determine the differences between the model parameters and the update parameter to be the updated model parameters.

In another embodiment, the determination sub-unit is further configured to determine the signal output error according to the I-path transmitted modeling signal, the Q-path transmitted modeling signal, the I-path modeling output signal and the Q-path modeling output signal in the following manner:

$$r(t) = \frac{1}{N} \sum_{a=1}^{N} \left( \left| p_I(a) - s_I(a) \right|^2 + \left| p_Q(a) - s_Q(a) \right|^2 \right)$$

,

wherein $r(t)$ represents the signal output error, $p_I(a)$ represents the I-path modeling output signal, $p_Q(a)$ represents the Q-path modeling output signal, $s_I(a)$ represents the I-path transmitted modeling signal, $s_Q(a)$ represents the Q-path transmitted modeling signal, and N represents the length of the modeling characteristic signal.

It should be noted that, the foregoing modules may be implemented by software or hardware, and for the latter, the foregoing modules may be implemented in the following manner, but are not limited thereto: the foregoing modules are all located in the same processor; or the foregoing modules are respectively located in different processors in any combinations.

The embodiments of the present invention further provide a computer-readable storage medium, wherein a computer program is stored in the computer-readable storage medium, and the computer program is configured to execute the steps in any one of the foregoing method embodiments when running.

In an exemplary embodiment, the computer-readable storage medium may include, but is not limited to, various media capable of storing computer programs, such as a USB flash disk, a read-only memory (Read-Only Memory, referred to as ROM), a random access memory (Random Access Memory, referred to as RAM), a mobile hard disk, a magnetic disk, or an optical disc.

The embodiments of the present invention further provide an electronic apparatus, including: a memory and a processor, wherein a computer program is stored in the memory, and the processor is configured to run a computer program to execute the steps in any one of the foregoing method embodiments.

In an exemplary embodiment, the electronic apparatus may further include a transmission device and an input and output device, wherein the transmission device is connected to the processor, and the input and output device is connected to the processor.

For specific examples in the present embodiment, reference may be made to the examples described in the foregoing embodiments and exemplary embodiments, and details are not described herein again.

Obviously, it should be understood by those skilled in the art that, various modules or various steps of the present invention may be implemented by a universal computing apparatus, may be concentrated on a single computing apparatus or distributed on a network composed of a plurality of computing apparatuses, and may be implemented by program codes, which may be executed by the computing apparatus. Therefore, the modules or steps may be stored in a storage apparatus to be implemented by the computing apparatus, and in some cases, the steps shown or described may be executed in an order different from that described here, or they are made into various integrated circuit modules respectively, or a plurality of modules or steps therein may be made into a single integrated circuit module for implementation. In this way, the present invention is not limited to any particular combination of hardware and software.

The foregoing descriptions are merely preferred embodiments of the present invention, and are not used to limit the present invention, and for those skilled in the art, the present invention may have various changes and modifications. Any modifications, equivalent replacements, improvements and the like, made within the principles of the present invention, should all be included within the protection scope of the present invention.

**Claims**

1. A method for processing signal compensation, comprising:

   acquiring an I-path received data signal obtained by receiving an I-path transmitted data signal, and a Q-path received data signal obtained by receiving a Q-path transmitted data signal;
   performing cascade transformation on the I-path received data signal and the Q-path received data signal, so as to obtain a data characteristic signal; and
   compensating the data characteristic signal according to predetermined target model parameters, so as to obtain an IQ equalized signal.

2. The method according to claim 1, wherein compensating the data characteristic signal according to the predetermined target model parameters, so as to obtain the IQ equalized signal comprises:

   mapping the data characteristic signal according to the target model parameters, so as to obtain an I-path linear data signal, a Q-path linear data signal, an I-path nonlinear data signal, and a Q-path nonlinear data signal; and determining a sum of the I-path linear data signal and the I-path nonlinear data signal to be an I-path equalized signal, and determining a sum of the Q-path linear data signal and the Q-path nonlinear data signal to be a Q-path equalized signal, wherein the IQ equalized signal comprises the I-path equalized signal and the Q-path equalized signal.

**3.** The method according to claim 2, wherein mapping the data characteristic signal according to the target model parameters, so as to obtain the I-path linear data signal, the Q-path linear data signal, the I-path nonlinear data signal and the Q-path nonlinear data signal comprises:

processing the linear crosstalk of an I-path optical signal of the data characteristic signal according to the target model parameters, so as to obtain the I-path linear data signal;
processing the linear crosstalk of a Q-path optical signal of the data characteristic signal according to the target model parameters, so as to obtain the Q-path linear data signal; and
processing the crosstalk between two IQ paths of optical signals of the data characteristic signal according to the target model parameters, so as to obtain the I-path nonlinear data signal and the Q-path nonlinear data signal.

**4.** The method according to claim 3, wherein,
processing the linear crosstalk of the I-path optical signal of the data characteristic signal according to the target model parameters, so as to obtain the I-path linear data signal comprises:

performing linear mapping on the data characteristic signal according to the target model parameters in the following manner, so as to obtain the I-path linear data signal: $l_I^{'}(t) = \hat{W}_1^T \times k^{'}(t) + \vec{\hat{b}}_1$ , wherein $1 \leq t \leq N$, and N represents the length of the data characteristic signal; and/or
processing the linear crosstalk of the Q-path optical signal of the data characteristic signal according to the target model parameters, so as to obtain the Q-path linear data signal comprises:

performing linear mapping on the data characteristic signal according to the target model parameters in the following manner, so as to obtain the Q-path linear data signal:

$$l_Q^{'}(t) = \hat{W}_2^T \times k^{'}(t) + \vec{\hat{b}}_2 ;$$

and/or
processing the crosstalk between the two IQ paths of optical signals of the data characteristic signal according to the target model parameters, so as to obtain the I-path nonlinear data signal and the Q-path nonlinear data signal comprises:

performing nonlinear mapping on the data characteristic signal according to the target model parameters in the following manner, so as to obtain the I-path nonlinear data signal and the Q-path nonlinear data

signal: $\begin{bmatrix} n_I^{'}(t) \\ n_Q^{'}(t) \end{bmatrix} = \hat{W}_3^{(0)^T} f(\hat{W}_3^{(2)^T} f(\hat{W}_3^{(1)^T} k^{'}(t) + \vec{\hat{b}}_3^{(1)}) + \vec{\hat{b}}_3^{(2)}) + \vec{\hat{b}}_3^{(0)}$ ;

wherein $\hat{W}_1^T$ , $\hat{W}_2^T$ , $\vec{\hat{b}}_1$ , $\vec{\hat{b}}_2$ , $\hat{W}_3^{(0)^T}$ , $\hat{W}_3^{(2)^T}$ , $\hat{W}_3^{(1)^T}$ , $\vec{\hat{b}}_3^{(1)}$ , $\vec{\hat{b}}_3^{(2)}$ and $\vec{\hat{b}}_3^{(0)}$ represent the target model parameters, and *f(x)* represents an activation function.

**5.** The method according to claim 1, wherein performing cascade transformation on the I-path received data signal and the Q-path received data signal, so as to obtain the data characteristic signal comprises:

respectively sampling the I-path received data signal and the Q-path received data signal according to a window length taps, so as to obtain N groups of I-path sampled signals and N groups of Q-path sampled signals, wherein for the N groups of I-path sampled signals and the N groups of Q-path sampled signals, a central signal of each group of sampled signals is a current sampling point, (taps-1)/2 points on the left side of the central signal are (taps-1)/2 sampling points, which are intercepted forward from the current sampling point, (taps-1)/2 points on the right side of the central signal are (taps-1)/2 sampling points, which are intercepted backward from the current sampling point, if the forward or backward sampling points are less than (taps-1)/2, 0 is compensated, the taps is an odd number, and N represents the length of the I-path received data signal and the Q-path received data signal; and

respectively cascading the N groups of I-path sampled signals and the N groups of Q-path sampled signals of which the lengths are the taps, so as to obtain the data characteristic signal comprising N signals of which the lengths are 2 taps.

6. The method according to any one of claims 1-5, wherein before performing cascade transformation on the IQ received data signals obtained by receiving the IQ transmitted data signals, so as to obtain the data characteristic signal, the method further comprises:

acquiring an I-path received modeling signal obtained by receiving an I-path transmitted modeling signal, and a Q-path received modeling signal obtained by receiving a Q-path transmitted modeling signal;
performing cascade transformation on the I-path received modeling signal and the Q-path received modeling signal, so as to obtain a modeling characteristic signal; and
updating model parameters according to the modeling characteristic signal, so as to obtain the target model parameters.

7. The method according to claim 6, wherein performing cascade transformation on the I-path received modeling signal and the Q-path received modeling signal, so as to obtain the modeling characteristic signal comprises:

respectively sampling the I-path received modeling signal and the Q-path received modeling signal according to a window length taps, so as to obtain N groups of I-path sampled signals and N groups of Q-path sampled signals, wherein for the N groups of I-path sampled signals and the N groups of Q-path sampled signals, a central signal of each group of sampled signals is a current sampling point, (taps-1)/2 points on the left side of the central signal are (taps-1)/2 sampling points, which are intercepted forward from the current sampling point, (taps-1)/2 points on the right side of the central signal are (taps-1)/2 sampling points, which are intercepted backward from the current sampling point, if the forward or backward sampling points are less than (taps-1)/2, 0 is compensated, the taps is an odd number, and N represents the length of the I-path received modeling signal and the Q-path received modeling signal; and
respectively cascading the N groups of I-path sampled signals and the N groups of Q-path sampled signals of which the lengths are the taps, so as to obtain the modeling characteristic signal comprising N signals of which the lengths are 2 taps.

8. The method according to claim 6, wherein updating the model parameters according to the modeling characteristic signal, so as to obtain the target model parameters comprises:
repeatedly executing the following steps until the number of iterations t satisfies a preset iteration condition, and determining the updated model parameters to be the target model parameters:

when t=0, initializing the model parameters, mapping the modeling characteristic signal according to the model parameters, so as to obtain an I-path linear modeling signal, a Q-path linear modeling signal, an I-path nonlinear modeling signal and a Q-path nonlinear modeling signal;
performing addition processing according to the I-path linear modeling signal and the I-path nonlinear modeling signal, so as to obtain an I-path modeling output signal, and performing addition processing according to the Q-path linear modeling signal and the Q-path nonlinear modeling signal, so as to obtain a Q-path modeling output signal; and
updating the model parameters according to the I-path transmitted modeling signal, the Q-path transmitted modeling signal, the I-path modeling output signal and the Q-path modeling output signal, so as to obtain updated model parameters, wherein the IQ transmitted modeling signal comprises the I-path transmitted modeling signal and the Q-path transmitted modeling signal;
wherein t=t+1.

9. The method according to claim 8, wherein mapping the modeling characteristic signal according to the model parameters, so as to obtain the I-path linear modeling signal, the Q-path linear modeling signal, the I-path nonlinear modeling signal and the Q-path nonlinear modeling signal comprises:

processing the linear crosstalk of an I-path optical signal of the modeling characteristic signal according to the model parameters, so as to obtain the I-path linear modeling signal;

processing the linear crosstalk of a Q-path optical signal of the modeling characteristic signal according to the model parameters, so as to obtain the Q-path linear modeling signal; and

processing the crosstalk between two IQ paths of optical signals of the modeling characteristic signal according to the model parameters, so as to obtain the I-path nonlinear modeling signal and the Q-path nonlinear modeling signal.

**10.** The method according to claim 9, wherein,

processing the linear crosstalk of the I-path optical signal of the modeling characteristic signal according to the model parameters, so as to obtain the I-path linear modeling signal comprises:

performing linear mapping on the modeling characteristic signal according to the model parameters in the following manner, so as to obtain the I-path linear modeling signal: $l_I(t) = \mathbf{W}_1^{\mathbf{T}} \times k(t) + \vec{b_1}$ , wherein $1 \leq t \leq N$, and N represents the length of the modeling characteristic signal; and/or

processing the linear crosstalk of the Q-path optical signal of the modeling characteristic signal according to the model parameters, so as to obtain the Q-path linear modeling signal comprises:

performing linear mapping on the modeling characteristic signal according to the model parameters in the following manner, so as to obtain the Q-path linear modeling signal: $l_Q(t) = \mathbf{W}_2^{\mathbf{T}} \times k(t) + \vec{b_2}$ ; and/or

processing the crosstalk between two IQ paths of optical signals of the modeling characteristic signal according to the model parameters, so as to obtain the I-path nonlinear modeling signal and the Q-path nonlinear modeling signal comprises:

performing nonlinear mapping on the modeling characteristic signal according to the model parameters in the following manner, so as to obtain the I-path nonlinear modeling signal and the Q-path nonlinear modeling signal:
$$\begin{bmatrix} n_I(t) \\ n_Q(t) \end{bmatrix} = \mathbf{W}_3^{(o)T} f(\mathbf{W}_3^{(2)T} f(\mathbf{W}_3^{(1)\mathbf{T}} k(t) + \vec{b_3^{(1)}}) + \vec{b_3^{(2)}}) + \vec{b_3^{(0)}}$$
, wherein $\mathbf{W}_1^{\mathbf{T}}$, , $\mathbf{W}_2^{\mathbf{T}}$, $\vec{b_1}$, $\vec{b_2}$, $\mathbf{W}_3^{(1)T}, \mathbf{W}_3^{(2)T}, \mathbf{W}_3^{(o)T}$, $\vec{b_3^{(1)}}$, $\vec{b_3^{(2)}}$ and $\vec{b_3^{(0)}}$ represent the model parameters, and represents the activation function.

**11.** The method according to claim 8, wherein updating the model parameters according to the I-path transmitted modeling signal, the Q-path transmitted modeling signal, the I-path modeling output signal and the Q-path modeling output signal, so as to obtain the updated model parameters comprises:

determining a signal output error according to the I-path transmitted modeling signal, the Q-path transmitted modeling signal, the I-path modeling output signal and the Q-path modeling output signal; and

updating the model parameters according to the signal output error, so as to obtain the updated model parameters.

**12.** The method according to claim 11, wherein updating the model parameters according to the signal output error, so as to obtain the updated model parameters comprises:

respectively determining a partial derivative of the signal output error for the model parameters, so as to obtain a target matrix having the same dimension as the model parameters, and

updating the model parameter according to the target matrix, so as to obtain the updated model parameters.

**13.** The method according to claim 12, wherein updating the model parameter according to the target matrix, so as to obtain the updated model parameters comprises:

determining an update parameter in the following manner:

$$H(t) = \alpha \cdot \mathbf{M}'(t) / (\sqrt{\mathbf{V}'(t)} + \varepsilon) \text{ ,}$$

$$\mathbf{M}'(t) = \mathbf{M}(t) / (1 - \beta_1^t) \text{ ,}$$

$$\mathbf{V}'(t) = \mathbf{V}(t) / (1 - \beta_2^t) \text{ ,}$$

$$\mathbf{M}(t) = \beta_1 \mathbf{M}(t-1) + (1 - \beta_1)\mathbf{G}(t) \text{ ,}$$

$$\mathbf{V}(t) = \beta_2 \mathbf{V}(t-1) + (1 - \beta_2)\mathbf{G}^2(t) \text{ ,}$$

wherein $H(t)$ represents the update parameter, $\mathbf{M}(t)$ represents a momentum matrix, $\mathbf{V}(t)$ represents a velocity matrix, $\mathbf{G}(t)$ represents the target matrix, $\alpha=0.001$, $\beta_1=0.9$ , $\beta_2=0.999$, $\varepsilon=10^{-8}$, $\mathbf{M}(-1) = 0$, $\mathbf{V}(-1) = 0$ , $0 \leq t \leq t_{max}$, $t_{max}$ represents a threshold value of the preset number of iterations; and
determining the differences between the model parameters and the update parameter to be the updated model parameters.

14. The method according to claim 11, wherein the method further comprises:
determining the signal output error according to the I-path transmitted modeling signal, the Q-path transmitted modeling signal, the I-path modeling output signal and the Q-path modeling output signal in the following manner:

$$r(t) = \frac{1}{N} \sum_{a=1}^{N} (\left| p_I(a) - s_I(a) \right|^2 + \left| p_Q(a) - s_Q(a) \right|^2) \text{ ,}$$

wherein $r(t)$ represents the signal output error, $p_I(a)$ represents the I-path modeling output signal, $p_Q(a)$ represents the Q-path modeling output signal, $s_I(a)$ represents the I-path transmitted modeling signal, $s_Q(a)$ represents the Q-path transmitted modeling signal, and N represents the length of the modeling characteristic signal.

15. An apparatus for processing signal compensation, comprising:

a first acquisition module, configured to acquire an I-path received data signal obtained by receiving an I-path transmitted data signal, and a Q-path received data signal obtained by receiving a Q-path transmitted data signal;
a first cascade module, configured to perform cascade transformation on the I-path received data signal and the Q-path received data signal, so as to obtain a data characteristic signal; and
a compensation module, configured to compensate the characteristic signal according to predetermined target model parameters, so as to obtain an IQ equalized signal.

16. A computer-readable storage medium, wherein a computer program is stored in the computer-readable storage medium, and the computer program is configured to execute, when running, the method as claimed in any one of claims 1-14.

17. An electronic apparatus, comprising: a memory and a processor, wherein a computer program is stored in the memory, and the processor is configured to run the computer program, so as to execute the method as claimed in any one of claims 1-14.

Input/output device | Transmission device
108 | 106

Processor 102

Memory
104

Fig. 1

An I-path received data signal obtained by receiving an I-path transmitted data signal, and a Q-path received data signal obtained by receiving a Q-path transmitted data signal are acquired — S202

Cascade transformation is performed on the I-path received data signal and the Q-path received data signal, so as to obtain a data characteristic signal — S204

The data characteristic signal is compensated according to predetermined target model parameters, so as to obtain an IQ equalized signal — S206

Fig. 2

An I-path received modeling signal obtained by receiving an I-path transmitted modeling signal, and a Q-path received modeling signal obtained by receiving a Q-path transmitted modeling signal are acquired ⌒ S302

Cascade transformation is performed on the I-path received modeling signal and the Q-path received modeling signal, so as to obtain a modeling characteristic signal ⌒ S304

Model parameters is updated according to the modeling characteristic signal, so as to obtain the target model parameters ⌒ S306

Fig. 3

S401, model parameters are initialized, and a flag bit is initialized to be flag=False

S402, it is determined whether flag=True

S403, an I-path received modeling signal is received and recorded

S404, a Q-path received modeling signal is received and recorded

S414, an I-path received data signal is receivied and recorded

S415, a Q-path received data signal is received and recorded

S405, cascade transformation is performed according to the recorded I-path received modeling signal and the Q-path received modeling signal, so as to obtain a modeling characteristic signal ,and the modeling characteristic signal is recorded

S406, linear mapping is performed on the modeling characteristic signal, so as to obtain an I-path linear modeling signal, specifically

S408, nonlinear mapping is performed on the modeling characteristic signal, so as to obtain an I-path nonlinear modeling signal and a Q-path nonlinear modeling signal

S407, linear mapping is performed on the modeling characteristic signal, so as to obtain a Q-path linear modeling signal, specifically

S416, cascade transformation is performed according to the recorded I-path received data signal and the Q-path received data signal, so as to obtain a data characteristic signal, and the data characteristic signal is recorded

S409, addition is performed according to the recorded I-path linear modeling signal and the I-path nonlinear modeling signal, so as to obtain an I-path modeling output signal, and the I-path modeling output signal is recorded

S410, addition is performed according to the recorded Q-path linear modeling signal and the Q-path nonlinear modeling signal, so as to obtain a Q-path modeling output signal ,and the Q-path modeling output signal is recorded

S417, An I-path equalized data signal and a Q-path equalized data signal are equalized and recorded according to the recorded model parameters and the data characteristic signal

S411, an output error is calculated according to the recorded I-path modeling output signal, the Q-path modeling output signal, the I-path transmitted modeling signal and the Q-path transmitted modeling signal, and the model parameters are updated

S412, it is determined whether an iteration condition is terminated

S413, the flag bit is set to be flag=True, the model parameters are recorded

Fig. 4

Fig. 5

Fig. 6

First acquisition module — 72

First cascade module — 74

Compensation module — 76

Fig. 7

Second acquisition module — 82

Second cascade module — 84

Update module — 86

First acquisition module — 72

First cascade module — 74

Compensation module — 76

Fig. 8

## INTERNATIONAL SEARCH REPORT

| International application No. |
|---|
| **PCT/CN2021/115480** |

**A. CLASSIFICATION OF SUBJECT MATTER**

H04L 27/36(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE: 光, I路, Q路, 正交, 同相, 信号, 均衡, 补偿, 映射, 神经网络, 模型, 训练, in-phase, quadrature, signal, equalization, compensation, map+, neural networks, ANN, DNN, model, train+

**C. DOCUMENTS CONSIDERED TO BE RELEVANT**

| Category* | Citation of document, with indication, where appropriate, of the relevant passages | Relevant to claim No. |
|---|---|---|
| X | CN 110830112 A (QINGDAO HISENSE ELECTRIC CO., LTD.) 21 February 2020 (2020-02-21)<br>    description paragraphs [0043]-[0129], figure 5 | 1-17 |
| A | CN 110380789 A (ZTE CORPORATION et al.) 25 October 2019 (2019-10-25)<br>    entire document | 1-17 |
| A | CN 105471784 A (NATIONAL UNIVERSITY OF DEFENSE TECHNOLOGY, PLA.) 06 April 2016 (2016-04-06)<br>    entire document | 1-17 |
| A | CN 110460402 A (HARBIN ENGINEERING UNIVERSITY) 15 November 2019 (2019-11-15)<br>    entire document | 1-17 |
| A | CN 101272373 A (BEIJING NORTHERN FIBERHOME TECHNOLOGIES CO., LTD.) 24 September 2008 (2008-09-24)<br>    entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 November 2021** | **18 November 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/115480**

| Patent document cited in search report | | | Publication date (day/month/year) | Patent family member(s) | | | Publication date (day/month/year) |
|---|---|---|---|---|---|---|---|
| CN | 110830112 | A | 21 February 2020 | None | | | |
| CN | 110380789 | A | 25 October 2019 | None | | | |
| CN | 105471784 | A | 06 April 2016 | None | | | |
| CN | 110460402 | A | 15 November 2019 | None | | | |
| CN | 101272373 | A | 24 September 2008 | CN | 101272373 | B | 08 September 2010 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010899442X